# EUROPÄISCHE PATENTSCHRIFT

(11) **EP 3 273 054 B1**
(45) Veröffentlichungstag und Bekanntmachung des Hinweises auf die Patenterteilung: **27.03.2019**
(21) Anmeldenummer: 16180377.0
(22) Anmeldetag: 20.07.2016
(51) Int. Cl.: F03D 7/02, F03D 13/30

(54) **VERFAHREN ZUR BESTIMMUNG EINER EINBAUPOSITION FÜR EINEN DREHANTRIEB IN EINER WINDENERGIEANLAGE**
METHOD FOR DETERMINING AN INSTALLATION POSITION FOR A ROTARY DRIVE IN A WIND TURBINE
PROCEDE DE DETERMINATION D'UNE POSITION DE MONTAGE POUR UN ENTRAINEMENT ROTATIF DANS UNE EOLIENNE

(43) Veröffentlichungstag der Anmeldung: 24.01.2018
(73) Patentinhaber: Nordex Energy GmbH, 22419 Hamburg (DE)
(72) Erfinder: Lampe, Frank, 18311 Ribnitz-Damgarten (DE); Knopp, Hauke, 20259 Hamburg (DE)
(74) Vertreter: Hauck Patentanwaltspartnerschaft mbB

(56) Entgegenhaltungen:
- EP-A1- 2 960 490
- CN-Y- 201 401 278
- US-A1- 2011 138 945

## Beschreibung

Die vorliegende Erfindung betrifft ein Verfahren zur Bestimmung einer Einbauposition für einen Drehantrieb in einer Verstelleinrichtung einer Windenergieanlage. Ein oder mehrere Drehantriebe werden in der Verstelleinrichtung der Windenergieanlage verwendet, um die Rotorblattstellung zu verändern (Pitchsystem) oder um die Gondel entsprechend der Windrichtung auszurichten (Azimutsystem).

Ein kreisförmiger Zahnkranz einer Verstelleinrichtung besitzt naturgemäß durch seine Herstellung und/oder den Transport eine gewisse Abweichung von der idealen Kreisform. Für einen solchen Zahnkranz einer Verstelleinrichtung ist in der Regel vorgesehen, den Bereich mit dem größten Radius und den Bereich mit dem kleinsten Radius des Zahnkranzes zu markieren. Innerhalb dieses markierten Bereichs erfolgt ein Einstellen eines vorgeschriebenen Zahnflankenspiels nach mechanischen Aspekten, in dem die Drehantriebe in ihrer Lage relativ zum Zahnkranz bestmöglich eingestellt werden.

Aus WO 2012/000504 A1 ist ein Positioniersystem mit mehreren Positionierantrieben bekannt geworden, die jeweils einen Sensor für einen Lastparameter aufweisen. Die erfasste Last wird mit erwarteten Lastwerten verglichen, wobei bei einer zu großen Abweichung ein Alarmsignal erzeugt wird. Aus US 2014/0064961 A1 ist ein Rotorblattstellantrieb für eine Windenergieanlage bekannt geworden, bei dem zur Speicherung der Null-Position zwei Winkelsensoren eingesetzt werden.

Ein weiteres Beispiel aus dem Stand der Technik ist aus CN201401278Y bekannt.

Der Erfindung liegt die Aufgabe zugrunde, ein Verfahren zur Bestimmung einer Einbauposition für einen Drehantrieb in einer Windenergieanlage bereitzustellen, das mit möglichst einfachen Mitteln eine Positionierung des Drehantriebs relativ zu dem Zahnkranz erlaubt.

Erfindungsgemäß wird die Aufgabe durch ein Verfahren mit den Merkmalen aus Anspruch 1 gelöst. Vorteilhafte Ausgestaltungen bilden die Unteransprüche.

Das erfindungsgemäße Verfahren dient zur Bestimmung einer Einbauposition für einen Drehantrieb in einer Windenergieanlage. Bei dem Drehantrieb handelt es sich um einen Pitchantrieb oder einen Azimutantrieb, die jeweils aus einem Motor, einem Getriebe und einem Antriebsritzel bestehen. Die Verstelleinrichtung weist einen kreisförmigen Zahnkranz und mindestens einen mit dem Zahnkranz zusammenwirkenden Drehantrieb auf. In dem erfindungsgemäßen Verfahren fährt in einem Verfahrensschritt die Verstelleinrichtung eine Drehposition an. In der angefahrenen Drehposition wird der Zahnkranz der Verstelleinrichtung fixiert, beispielsweise durch ein Festbremsen. In einem nachfolgenden Schritt wird ein Drehmoment in einer Drehrichtung durch den mindestens einen Drehantrieb aufgebracht. Hierzu wird ein Wert für ein zwischen dem Antriebsritzel des Drehantriebs und dem Zahnkranz bestehendes Zahnflankenspiel erfasst. Der erfasste Wert für das Zahnflankenspiel wird in Bezug auf die Drehrichtung, den Drehantrieb und die Drehposition abgespeichert. Dieser Vorgang wird für beide Drehrichtungen, mehrere Drehpositionen und/oder gegebenenfalls weitere Drehantriebe wiederholt. Durch die Wiederholung entsteht eine mehr oder weniger vollständige Darstellung des Zahnflankenspiels für einen oder mehrere Drehantriebe in einer oder mehreren Drehpositionen der Verstelleinrichtung. Ausgehend von diesen gespeicherten Werten kann für einen Drehantrieb eine Einbauposition gefunden werden, bei der ein minimales Zahnflankenspiel einem vorbestimmten Zahnflankenspiel entspricht.

Das vorbestimmte Zahnflankenspiel ist konstruktiv beispielsweise durch die Form der Zähne und das Verhältnis der Durchmesser von Antriebsritzel und Zahnkranz vorgegeben. Es wird also eine Einbauposition gesucht und eingestellt, bei der das minimale Zahnflankenspiel bei einer vollständigen Drehung des Zahnkranzes stets gleich dem oder größer als das vorbestimmte Zahnflankenspiel ist. Der Vorteil des erfindungsgemäßen Verfahrens liegt ganz wesentlich darin, dass keine Verdrehbewegung der Verstelleinrichtung zum Auffinden der richtigen Einbauposition, beispielsweise bei einem Tausch des Drehantriebs, erfolgen muss. Vielmehr kann aufgrund des abgespeicherten Zahnflankenspiels eine korrekte Einbauposition im Vorfelde für eine beliebige Drehposition der Verstelleinrichtung bestimmt werden.

In einer bevorzugten Ausgestaltung wird beim Erfassen des Zahnflankenspiels die Drehrichtung des Drehantriebs gewechselt, sodass die Werte des Zahnflankenspiels für beide Drehrichtungen vorliegen.

In einer weiteren bevorzugten Ausgestaltung werden beim Erfassen des Zahnflankenspiels ein Drehwinkel und/oder eine Drehzahl zusammen mit einem Drehmoment des Drehantriebs ausgewertet. Dies schafft die Möglichkeit, den Drehwinkel und/oder die Drehzahl abhängig von einem erfassten Drehmoment auszuwerten. Das Zahnflankenspiel kann hierbei als der Winkelbereich angesehen werden, in dem der Drehantrieb mit einem konstanten Drehmoment verfahren wird. Ist der Winkelbereich des Zahnflankenspiels durchfahren, steigt das Drehmoment an.

In einer bevorzugten Ausgestaltung des erfindungsgemäßen Verfahrens ist die Einbauposition des Drehantriebs in einer Drehantriebshalterung relativ zu dem Zahnkranz einstellbar. Durch die Einstellbarkeit wird erreicht, dass ein neuer Drehantrieb beispielsweise in seine Drehantriebshalterung eingesetzt und dort für das gewünschte Zahnflankenspiel eingestellt werden kann. Ein solches Drehwerk ist beispielsweise aus EP 2 960 490 A1 bekannt.

In einer bevorzugten Weiterbildung des erfindungsgemäßen Verfahrens ist an der Verstelleinrichtung ein Getriebeflansch vorgesehen. Der Getriebeflansch weist eine Bohrung auf, die als Drehantriebshalterung ausgebildet ist. Für den in der Bohrung angeordneten Drehantrieb ist das Antriebsritzel exzentrisch zu dem Getriebeflansch ausgerichtet. Durch die exzentrische Anordnung kann der Drehantrieb durch eine Drehung in der Bohrung der Drehantriebshalterung in seine gewünschte Einbauposition gedreht werden.

Ein weiterer Vorzug des erfindungsgemäßen Verfahrens besteht darin, dass auch eine Steifigkeit eines Getriebes an dem Drehantrieb ermittelt werden kann. Hierzu wird eine Änderung des Drehmoments in Abhängigkeit von einer Änderung des Drehwinkels des Antriebsritzels ausgewertet. Diese Daten zur Steifigkeit des Getriebes können beispielsweise bei der Überwachung des Zustandes der Verstelleinrichtung berücksichtigt werden. Die Steifigkeit des Getriebes gibt Aufschluss über etwaige Abnutzungen oder Beschädigungen im Getriebe.

Wenn das Zahnflankenspiel nicht vollständig für den gesamten Umfang erfasst wird, kann das minimale Zahnflankenspiel auch im Bereich des maximalen Radius des Zahnkranzes ermittelt werden.

Die Erfindung wird nachfolgend näher erläutert. Es zeigen:
- Fig. 1: eine schematische Darstellung einer Verstelleinrichtung mit vier Drehantrieben,
- Fig. 2: die bei einem Messvorgang erfassten Werte für Drehwinkel, Drehzahl und Drehmoment, abhängig von der Zeit,
- Fig. 3: eine Darstellung des Zahnflankenspiels mit einem Drehmoment, abhängig von einer Winkelposition,
- Fig. 4: eine Darstellung des Winkelbereichs des Zahnflankenspiels in einer Detailansicht aus Fig. 3 und
- Fig. 5: Verlauf des Zahnflankenspiels abhängig vom Azimutwinkel.

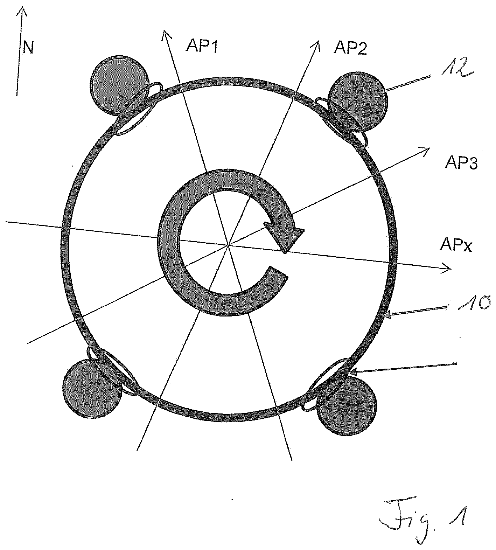

Fig. 1 zeigt in einer schematischen Darstellung einen Zahnkranz 10 mit vier über dessen Umfang verteilten Drehantrieben 12. Jeder der Drehantriebe 12 besitzt ein in dem Zahnkranz 10 kämmendes Antriebsritzel, das von einem Motor und einem Getriebe (nicht dargestellt) angetrieben wird. Der Motor kann beispielsweise ein Elektromotor sein, der von einem Frequenzumrichter angesteuert wird. Hydraulikmotoren sind ebenfalls möglich. Je nach Ausgestaltung und Einbauposition des Zahnkranzes 10 in der Windenergieanlage, kann dessen Zahnung auf der Innenseite oder der Außenseite des Zahnkranzes 10 angeordnet sein. Durch eine Ansteuerung der Drehantriebe 12 kann der Zahnkranz 10 beispielsweise in Drehrichtung 14 gedreht werden, so dass die Arbeitspositionen AP1, AP2 und AP3 angefahren werden. Die Arbeitsposition APX dient als Referenz, von der aus ein Drehwinkel gezählt wird.

Bei dem erfindungsgemäßen Verfahren wird eine Arbeitsposition angefahren und der Zahnkranz 10 in dieser Arbeitsposition fixiert, beispielsweise durch Bremskaliber einer Bremsvorrichtung festgebremst. Handelt es sich bei der Verstelleinrichtung um eine Azimutdrehverbindung, so wird die Azimutposition in Bezug zur Windrichtung häufig durch vorhandene Hydraulikbremsen gehalten, wenn keine Verstellbewegung der Azimutdrehverbindung erfolgt. Durch abwechselndes Anlegen eines begrenzten Drehmoments an beide Zahnflanken eines einzelnen Zahns des Antriebsritzels des Drehantriebs 12 und gleichzeitige Erfassung der dabei auftretenden Drehmomente und Drehzahlen kann das Zahnflankenspiel des jeweiligen Drehantriebs 12 aus den erfassten Werten berechnet werden. Dieses Zahnflankenspiel wird in mehreren Arbeitspositionen bestimmt, abgespeichert und kann mit Bezug auf die Arbeitspositionen wieder aufgerufen werden. Anhand dieser Daten lässt sich ein minimales Zahnflankenspiel für den gesamten Zahnkranz 10 bestimmen. Gleichzeitig kann für jede Arbeitsposition des Zahnkranzes 10 bei einem Tausch des Drehantriebs 12 das entsprechende Zahnflankenspiel vorgegeben werden.

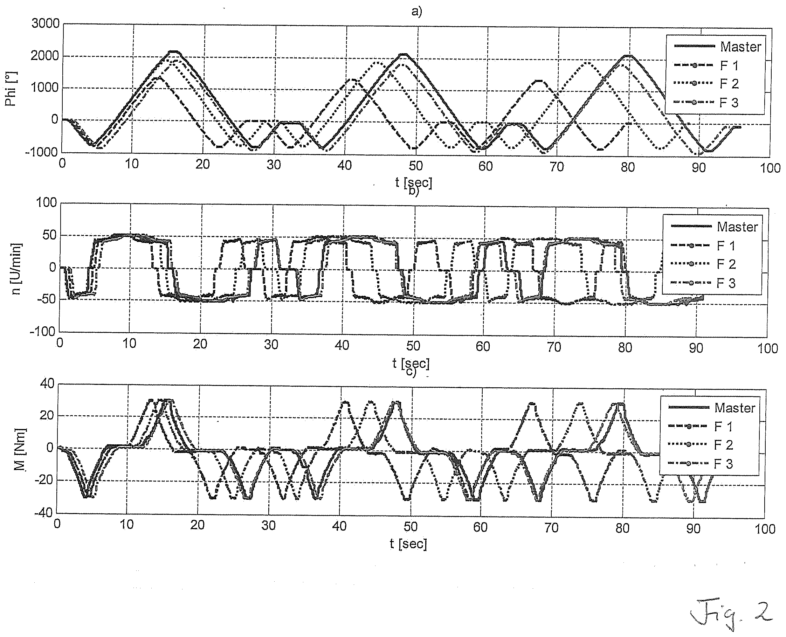

Fig. 2a zeigt für vier Drehantriebe 12 zunächst die Abhängigkeit eines Drehwinkels des Zahnkranzes 10 von der Zeit. Die Einheiten für den Drehwinkel an der Ordinate sind beliebig vergrößerte Einheiten. Deutlich wird, dass für die vier Drehantriebe 12 bei der vorliegenden Drehbewegung mit der Zeit die Winkellage der jeweiligen Zähne der Antriebsritzel immer weiter auseinanderfällt. Hierbei ist zu beachten, dass die Drehwinkel in beiden Richtungen verändert werden, wobei die Drehrichtung der Drehantriebe 12 ungefähr zu den Zeitpunkten, wo der Drehwinkel ein Maximum oder ein Minimum annimmt, geändert wird. Die sich ändernde Drehrichtung wird auch aus Fig. 2b deutlich, wo Drehzahlen in eine erste Drehrichtung positiv und Drehzahlen in entgegengesetzter Drehrichtung negativ aufgetragen sind. Auch in der Darstellung der Drehzahlen wiederholt sich die bereits für die Drehwinkel festgestellte, typische Struktur, dass mit der Zeit beim Verfahren der Verstelleinrichtung die Werte für das Zahnflankenspiel zeitlich mehr und mehr auseinanderfallen. Eine ähnliche Struktur ergibt sich auch für das ausgeübte Drehmoment in Fig. 2c. Auch hier erfolgt der Richtungswechsel der Drehantriebe 12 in den Zeitpunkten des maximalen oder minimalen Drehmoments.

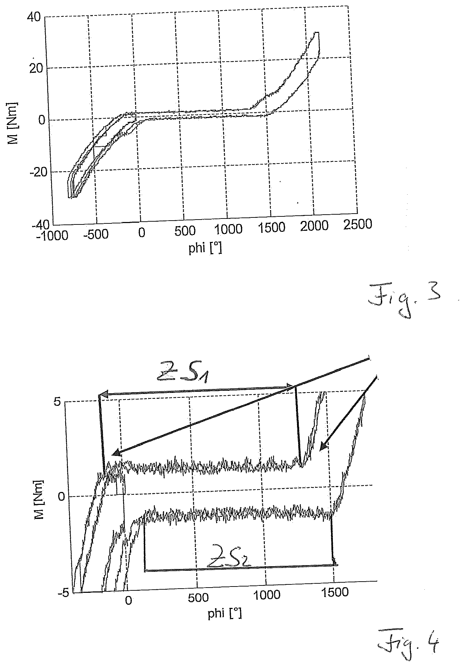

Fig. 3 zeigt eine charakteristische Darstellung, bei der das Drehmoment über dem Drehwinkel aufgetragen ist. Eine solche Darstellung ist möglich, da beide Messergebnisse über die Zeit parametrisiert sind. Es ergibt sich hieraus eine sehr deutliche Struktur, die das Zusammenspiel zwischen dem Drehantrieb 12 und dem Zahnkranz 10 an einem Zahn des Antriebsritzels des Drehantriebs 12 kennzeichnet.

Wie in Fig. 4 dargestellt, gibt es einen Winkelbereich, in dem sich bei der Änderung des Drehwinkels das Drehmoment im Wesentlichen nicht ändert.

Wie in Fig. 4 eingezeichnet, gibt es im Wesentlichen zwei Zahnflankenspiele, wobei ein erstes Zahnflankenspiel ZS₁ für eine erste Drehrichtung und ein zweites Zahnflankenspiel ZS₂ für eine zweite entgegengesetzte Drehrichtung auftritt. Wie in Fig. 4 dargestellt, sind diese im Wesentlichen gleich groß, allerdings vom Winkelbereich versetzt zueinander. Wie in Fig. 3 dargestellt, schließt sich an den horizontalen Bereich ein ungefähr linear steigender Bereich an. In dem linear steigenden Bereich kann die Steifigkeit des Getriebes als ΔM/Δphi ermittelt werden. Die Steifigkeit gibt an, um welchen Betrag sich das anliegende Drehmoment bei einer Änderung des Drehwinkels verändert. Die Kenntnis der ermittelten Werte für die Steifigkeit erlaubt es, etwaige Beschädigungen und andere Veränderungen in dem Getriebe oder dem Drehantrieb beurteilen zu können.

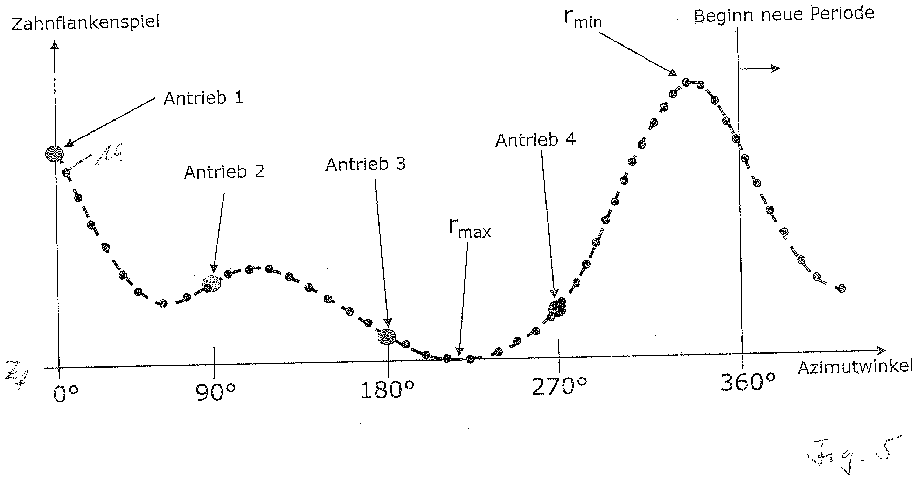

Fig. 5 zeigt den beispielhaften Verlauf eines Zahnflankenspiels, wie es an einem Zahnkranz 10 mit vier fest eingebauten Drehantrieben 12 gemessen wurde. Die klein dargestellten Punkte 14 bezeichnen hier jeweils die für die konkreten Einbaupositionen der vier Drehantriebe 12 gemessenen Zahnflankenspiele. Die vier Drehantriebe 12 sind in 90°-Abständen gleichmäßig über den Umfang des Zahnkranzes 10 angeordnet. In einem Bereich des Zahnkranzes 10, bei einem Winkel von ungefähr 220°, liegen der maximale Radius rₘₐₓ und das minimale Zahnflankenspiel Z_{fmin} vor. Das vorbestimmte Zahnflankenspiel Z_{f} ist hingegen ein von null verschiedener Wert, der durch die Geometrie der Zähne im Zahnkranz 10, die Geometrie der Zähne im Antriebsritzel und weitere Größen vorgegeben ist. Im Bereich des maximalen Radius rₘₐₓ ist das Zahnflankenspiel naturgemäß am kleinsten, d. h. die Zähne des Antriebsritzels tauchen am tiefsten in die Zahnung am Zahnkranz 10 ein. Durch den vorbestimmten minimalen Wert für das Zahnflankenspiel Z_{f} wird sichergestellt, dass die Zähne des Antriebsritzels nicht auf den Grund der Zahnung des Zahnkranzes 10 kommen. Im Bereich des minimalen Radius rₘᵢₙ liegt ein maximales Zahnflankenspiel vor. Hier muss sichergestellt sein, dass noch eine ausreichende Kraftübertragung zwischen Antriebsritzel und Zahnkranz erfolgt. In der Regel gibt es auch einen vorbestimmten Wert für das maximale Zahnflankenspiel, der nicht überschritten werden darf.

Die in Fig. 5 dargestellte Kurve hat nun zweierlei Bedeutung. Wird ein Drehantrieb 12 eingebaut und ist noch nicht bekannt, welches Zahnflankenspiel der Drehantrieb 12 besitzen soll, so kann dieser zunächst in einer ersten Position eingebaut werden. Die Kurve für das Zahnflankenspiel über dem Azimutwinkel kann gemessen und aufgezeichnet werden, entweder vollständig oder bevorzugt im Bereich des maximalen Radius rₘₐₓ. Ist diese Kurve dann für die aktuelle Einbauposition des Drehantriebs 12 gemessen worden, kann der Drehantrieb 12 in eine Position verstellt werden, in der er sicher auch im Bereich des maximalen Radius rₘₐₓ ein Zahnflankenspiel besitzt, das größer als das vorbestimmte Zahnflankenspiel Z_{f} ist.

Ist die Kurve bereits einmal aufgenommen worden und soll nun ein Drehantrieb 12, beispielsweise der Drehantrieb 12, der in einer Position bei nahe 90° eingebaut ist, ausgetauscht werden, so gibt die Kurve an, welches Zahnflankenspiel der auszutauschende Drehantrieb 12 bei einer Stellung von 90° besitzen soll. Es ist nicht notwendig, den Bereich des maximalen Radius rₘₐₓ zu dem Drehantrieb 12 hin zu verfahren, um dann dort das vorbestimmte Zahnflankenspiel Z_{f} in Bezug zum minimalen Zahnflankenspiel Z_{fmin} einzustellen. Vielmehr gibt die Kurve vor, welches Zahnflankenspiel bei einem Azimutwinkel von 90° eingestellt werden muss, um sicherzustellen, dass auch im Bereich des maximalen Radius rₘₐₓ das vorbestimmte Zahnflankenspiel Z_{f} nicht unterschritten wird.

### Bezugszeichenliste

- 10: Zahnkranz
- 12: Drehantrieb
- 14: Drehrichtung
- Z_{f}: vorbestimmtes Zahnflankenspiel
- Z_{fmin}: minimales Zahnflankenspiel
- rₘₐₓ: maximaler Radius
- rₘᵢₙ: minimaler Radius
- ZS: Zahnflankenspiel
- ZS₁: erstes Zahnflankenspiel
- ZS₂: zweites Zahnflankenspiel
- AP1: erste Arbeitsposition
- AP2: zweite Arbeitsposition
- AP3: dritte Arbeitsposition
- APX: Referenzpunkt

## Patentansprüche

1. Verfahren zur Bestimmung einer Einbauposition für einen Drehantrieb (12) in einer Windenergieanlage, die eine Verstelleinrichtung mit einem Zahnkranz (10) und mit mindestens einem mit dem Zahnkranz (10) zusammenwirkenden Drehantrieb (12) aufweist, das folgende Schritte durchführt:
- Anfahren einer Drehposition des Zahnkranzes (10) mit mindestens einem der Drehantriebe (12) der Verstelleinrichtung,
- Fixieren des Zahnkranzes (10) in der angefahrenen Drehposition,
- Aufbringen eines Drehmoments an dem Zahnkranz (10) in einer ersten Drehrichtung mit einem Drehantrieb (12),
- Erfassen eines Wertes für ein Zahnflankenspiel ZS für einen Zahn eines Antriebsritzels des Drehantriebs (12) und Abspeichern des erfassten Werts für das Zahnflankenspiel ZS für die Drehrichtung, den Drehantrieb (12) und die Drehposition,
- Wiederholen des Vorgangs für mehrere Drehpositionen und/oder weitere Drehantriebe (12),
- Ermitteln eines minimalen Zahnflankenspiels Z_{fmin} aus den erfassten Werten für das Zahnflankenspiel,
- Festlegen einer Einbauposition für den Drehantrieb (12), in der das minimale Zahnflankenspiel Z_{fmin} größer oder gleich einem vorbestimmten Zahnflankenspiel Z_{f} ist.

2. Verfahren nach Anspruch 1, **dadurch gekennzeichnet, dass** das Zahnflankenspiel ZS für eine zweite, entgegengesetzte Drehrichtung erfasst wird.

3. Verfahren nach Anspruch 1 oder 2, **dadurch gekennzeichnet, dass** beim Erfassen des Zahnflankenspiels ZS ein Drehwinkel und/oder eine Drehzahl zusammen mit einem Drehmoment des Drehantriebs (12) erfasst und ausgewertet werden.

4. Verfahren nach Anspruch 3, **dadurch gekennzeichnet, dass** ein Winkelbereich mit einem konstanten Drehmoment als Zahnflankenspiel ZS erfasst wird.

5. Verfahren nach einem der Ansprüche 1 bis 4, **dadurch gekennzeichnet, dass** die Einbauposition des Drehantriebs (12) in einer Drehantriebshalterung relativ zu dem Zahnkranz (10) einstellbar ist.

6. Verfahren nach Anspruch 5, **dadurch gekennzeichnet, dass** ein Getriebeflansch an dem Drehantrieb (12) vorgesehen ist, wobei das Antriebsritzel exzentrisch zu dem Getriebeflansch angeordnet ist.

7. Verfahren nach einem der Ansprüche 1 bis 6, **dadurch gekennzeichnet, dass** der Drehantrieb (12) ein Getriebe aufweist und eine Steifigkeit des Getriebes ermittelt wird, wobei hierzu eine Änderung des Drehmoments in Abhängigkeit von einer Änderung des Drehwinkels ausgewertet wird.

8. Verfahren nach einem der Ansprüche 1 bis 7, **dadurch gekennzeichnet, dass** das Zahnflankenspiel ZS in einem Drehwinkelbereich erfasst wird, in dem der Zahnkranz (10) seinen maximalen Radius rₘₐₓ besitzt.

## Claims

1. A method for determining an installation position for a rotary drive (12) in a wind turbine, which has an adjustment device with a gear ring (10) and with at least one rotary drive (12) working together with the gear ring (10), which performs the following steps:
- Approaching a rotary position of the gear ring (10) with at least one of the rotary drives (12) of the adjustment device,
- Immobilizing the gear ring (10) in the approached rotary position,
- Applying a torque to the gear ring (10) in a first rotational direction with a rotary drive (12),
- Capturing of a value for a tooth flank backlash ZS for a tooth of a drive pinion of the rotary drive (12) and saving the captured value for the tooth flank backlash ZS for the rotational direction, the rotary drive (12) and the rotary position,
- Repeating the procedure for several rotary positions and/or further rotary drives (12),
- Determining a minimum tooth flank backlash Z_{fmin} from the captured values for the tooth flank backlash,
- Determining an installation position for the rotary drive (12), in which the minimum tooth flank backlash Z_{fmin} is greater than or equal to a predetermined tooth flank backlash Z_{f}.

2. The method according to claim 1, **characterized in that** the tooth flank backlash ZS is captured for a second, opposite rotational direction.

3. The method according to claim 1 or 2, **characterized in that**, during the capturing of the tooth flank backlash ZS, an angle of rotation and/or a rotary speed are captured and evaluated together with a torque of the rotary drive (12).

4. The method according to claim 3, **characterized in that** an angle area with a constant torque is captured as the tooth flank backlash ZS.

5. The method according to one of claims 1 to 4, **characterized in that** the installation position of the rotary drive (12) is adjustable in a rotary drive holder relative to the gear ring (10).

6. The method according to claim 5, **characterized in that** a gearbox flange is provided on the rotary drive (12), wherein the drive pinion is arranged eccentrically to the gearbox flange.

7. The method according to one of claims 1 to 6, **characterized in that** the rotary drive (12) has a gearbox and a rigidity of the gearbox is determined, wherein for this a change in the torque is evaluated depending on a change in the angle of rotation.

8. The method according to one of claims 1 to 7, **characterized in that** the tooth flank backlash ZS is captured in an angle of rotation area in which the gear ring (10) has its maximum radius rₘₐₓ.

## Revendications

1. Procédé pour la détermination d'une position de montage pour un entraînement rotatif (12) dans une éolienne comportant au moins un appareil de réglage avec une couronne dentée (10) et au moins un entraînement rotatif (12) coopérant avec la couronne dentée (10), pour la mise en oeuvre des étapes suivantes :
- déplacement vers une position de rotation de la couronne dentée (10) avec l'un au moins des entraînements rotatifs (12) de l'appareil de réglage,
- fixation de la couronne dentée (10) dans la position de rotation approchée,
- application d'un couple de rotation sur la couronne dentée (10) dans une première direction de rotation avec un entraînement rotatif (12),
- détection d'une valeur pour un jeu de flancs de dent ZS pour une dent d'un pignon d'entraînement de l'entraînement rotatif (12) et enregistrement de la valeur détectée pour le jeu de flancs de dent ZS pour la direction de rotation, l'entraînement rotatif (12) et la position de rotation,
- répétition de l'opération pour plusieurs positions de rotation et/ou d'autres entraînements rotatifs (12),
- détermination d'un jeu de flancs de dent minimal Z_{fmin} à partir des valeurs détectées pour le jeu de flancs de dent,
- définition d'une position de montage pour l'entraînement rotatif (12), dans lequel le jeu de flancs de dent minimal Z_{fmin} est supérieur ou égal à un jeu de flancs de dent prédéterminé Z_{f}.

2. Procédé selon la revendication 1, **caractérisé en ce que** le jeu de flancs de dent ZS est détecté pour une deuxième direction de rotation opposée.

3. Procédé selon la revendication 1 ou 2, **caractérisé en ce que** lors de la détection du jeu de flancs de dent ZS, un angle de rotation et/ou une vitesse de rotation sont détectés et évalués ensemble avec un couple de rotation de l'entraînement rotatif (12).

4. Procédé selon la revendication 3, **caractérisé en ce qu'**une plage angulaire avec un couple de rotation constant est détectée en tant que jeu de flancs de dent ZS.

5. Procédé selon l'une des revendications 1 à 4, **caractérisé en ce que** la position de montage de l'entraînement rotatif (12) dans un support d'entraînement rotatif par rapport à la couronne dentée (10) est réglable.

6. Procédé selon la revendication 5, **caractérisé en ce qu'**il est prévu une bride d'engrenage sur l'entraînement rotatif (12), le pignon d'entraînement étant disposé de façon excentrique par rapport à la bride d'engrenage.

7. Procédé selon l'une des revendications 1 à 6, **caractérisé en ce que** l'entraînement rotatif (12) présente un engrenage et une rigidité de l'engrenage est déterminée, permettant ainsi d'évaluer une modification du couple de rotation en fonction d'une modification de l'angle de rotation.

8. Procédé selon l'une des revendications 1 à 7, **caractérisé en ce que** le jeu de flancs de dent ZS est détecté dans une plage d'angle de rotation dans laquelle la couronne dentée (10) a son rayon maximal rₘₐₓ.
